# FASCICULE DE BREVET EUROPEEN

(11) **EP 0 940 160 B1**
(45) Date de publication et mention de la délivrance du brevet: **01.06.2005**
(21) Numéro de dépôt: 99410015.4
(22) Date de dépôt: 05.03.1999
(51) Int. Cl.: A63C 5/00

(54) **Véhicule glissant pour sport de neige**
Schneesportgerät
Snow sport device

(30) Priorité: 06.03.1998 FR 9803003; 06.03.1998 FR 9803004; 06.03.1998 FR 9803005
(43) Date de publication de la demande: 08.09.1999
(73) Titulaire: Bibollet, Jean-Claude, F-74230 Thônes (FR)
(72) Inventeur: Bibollet, Jean-Claude, F-74230 Thônes (FR)
(74) Mandataire: Hecké, Gérard

(56) Documents cités:
- EP-A- 0 149 953
- CH-A- 537 198
- DE-U- 29 711 581
- US-A- 2 062 953
- US-A- 3 917 301
- US-A- 5 516 126
- L.BILLET ET V.FELTIN: M CANIQUE INDUSTRIELLE ET MATERIAUX, vol. 49, no. 4, décembre 1996, pages 171-173, XP000694630

## Description

### Domaine technique de l'invention

L'invention est relative à un véhicule glissant pour sport de neige, comprenant :
- un patin de glissement prenant appui sur la neige,
- un siège sur lequel s'assoit le conducteur,
- un élément de support articulé par rapport au patin de glissement autour d'un axe transversal s'étendant perpendiculairement au plan de symétrie du véhicule,
- et un organe de conduite manuel pour la commande directionnelle et de freinage du véhicule, ledit organe étant en liaison avec l'élément de support et conformé selon au moins une poignée ou un guidon, situé entre les jambes du pilote en avant du siège et dans le sens du glissement.

### Etat de la technique

Un appareil bien connu sous la dénomination "PARET" est réalisé entièrement en bois par assemblage à tenon mortaise du siège et du manche sur le patin. Dans la position normale de conduite, le patin unique glisse sur la neige, et il suffit d'exercer une traction sur le manche pour relever la partie antérieure du patin, en provoquant un effet de freinage sur l'arrière. La structure monobloc de cet appareil présente un encombrement et un poids importants, ce qui ne facilite pas son transport. Un autre inconvénient est l'absence de tout effet d'amortissement en cas de chocs encaissés lors d'une descente.

Le document FR-A-2000 762 se rapporte à une luge traineau, comportant un siège en forme de cuvette directement en contact avec la neige, et un levier de pilotage faisant saillie vers le haut. Un tel appareil est néanmoins difficile à diriger, étant donné la faible hauteur du siège par rapport au sol, et la largeur du patin qui ne permettent pas d'incliner l'appareil pour le faire changer de trajectoire autrement qu'en le pilotant comme une luge classique, c'est à dire en freinant avec le pied situé à l'intérieur du virage .

Le document WO95/16504 décrit un appareil permettant la pratique du ski alpin à un skieur handicapé des jambes. L'appareil comporte une semelle liée à un ski alpin classique, et un bras de support d'un siège, lequel est articulé à l'avant sur un axe de basculement. L'équilibre et la conduite s'opèrent à l'aide des bras du skieur, un petit ski étant monté à l'extrémité de chacun des deux bâtons, et prenant appui sur la piste selon une orientation prédéterminée dans les virages. Un ressort amortisseur télescopique permet d'encaisser les chocs mécaniques lors de la pratique du ski. Un tel dispositif est très lourd, et n'est pas adapté pour être transporté facilement par l'utilisateur.

Le document CH-A-537198 décrit un ski-bob équipé de deux skis connectés au châssis par deux bras articulés et par des amortisseurs à déformation élastique.

Le document US-A-3917301 décrit un monoski ayant un siège formant une pièce indépendante de l'élément de support, et étant articulée à ce dernier par deux liaisons à articulations à l'avant et à l'arrière. L'élément de support est formé d'autre part par deux leviers pivotants selon un système de compas, présentant une structure complexe.

### Objet de l'invention

L'objet de l'invention consiste à réaliser un véhicule glissant pour sport de neige, pouvant être facilement transportable, et bénéficiant d'un confort optimum de suspension.

Le véhicule glissant selon l'invention est caractérisé en ce que la partie intermédiaire de l'élément de support constitue ledit siège, lequel est solidaire et prolongé à l'avant par l'organe de conduite, faisant ainsi corps avec ce dernier.

Selon un mode de réalisation préférentiel, l'élément de support est relié au patin par une liaison mécanique, permettant de rabattre l'élément de support contre le patin dans la position de rangement et de transport.

La liaison mécanique peut être déconnectable à l'une de ses extrémités, ou être formée par une genouillère à biellettes repliables selon des branches d'un compas. La liaison mécanique peut être également formée par des biellettes téléscopiques.

Selon une caractéristique de l'invention, la liaison mécanique comporte une biellette articulée sur un axe du patin, et ayant une extrémité opposée coopérant avec des moyens de commande susceptibles de verrouiller la biellette dans une position active pour obtenir un décalage angulaire de l'élément de support par rapport au patin, ou de déverrouiller la biellette pour briser la liaison mécanique lors du rangement. L'extrémité déconnectable de la biellette est pourvue avantageusement d'un axe maintenu en position verrouillée au fond d'une encoche de l'élément support au moyen d'un verrou.

Selon une caractéristique de l'invention, la liaison mécanique est équipée d'un organe amortisseur autorisant un mouvement relatif de l'élément de support par rapport au patin. L'organe amortisseur peut être formé par un ressort de suspension, ou un combiné ressort -amortisseur oléopneumatique ou hydraulique, lequel est équipé éventuellement d'un dispositif de réglage manuel de la précontrainte ou de la dureté. Il est également possible de faire usage d'un élément en matière élastiquement déformable, notamment du caoutchouc ou un élastomère.

Un organe de freinage est agencé à l'arrière du patin, et la surface de glissement du patin comporte au moins une partie de forme convexe ou concave dans le sens transversal, et un prolongateur pour prolonger le patin vers l'arrière.

Selon une autre caractéristique de l'invention, le véhicule comporte un dispositif repose-pied disposé à l'avant de la liaison mécanique et sous le niveau du siège, en étant solidarisé à une extension de l'élément support, ou à la spatule relevée du patin.

Pour freiner le véhicule en descente, il suffit de tirer vers soi la poignée de l'organe de conduite de manière à cabrer le véhicule suite au raclage de l'extrémité arrière du patin dans la neige.

L'élément de support est équipé au moins d'une ouverture pour constituer une poignée de préhension, et/ou d'une bretelle de portage pour faciliter le transport du véhicule. Le véhicule glissant comporte avantageusement des moyens d'arrimage du pilote sur le siège .

Le patin comporte avantageusement au moins deux surfaces latérales d'appui et de glissement s'étendant sur une partie au moins de la longueur du patin, et disposées symétriquement de part et d'autre d'une surface centrale tout en étant décalées dans le sens vertical par rapport à celle -ci. Selon une autre réalisation, la surface d'appui et de glissement du patin comporte au moins deux surfaces disposées symétriquement par rapport au plan vertical de symétrie du véhicule, dans deux plans sécants formant un dièdre ouvert vers le haut.

Selon une autre variante de réalisation, le siège est relié au patin au moyen d'une liaison mécanique à deux axes d'articulation, l'organe amortisseur comportant un système de butées élastiques à déformation progressive, agencées respectivement sur la face supérieure du patin en avant de l'axe d'articulation, et sous le siège de part et d'autre d'une jambe de ladite liaison.

Selon une autre variante de réalisation, le siège est articulé au patin autour d'un axe, la suspension étant assurée par l'intermédiaire d'une butée à élasticité progressive, fixée sur la face supérieure du patin et coopérant avec une plaque d'appui logée dans une face inférieure du siège, ladite plaque étant ajustable pour le réglage de l'inclinaison du siège et la précontrainte de la butée.

### Description sommaire des dessins

D'autres avantages et caractéristiques ressortiront plus clairement de la description qui va suivre de différents modes de réalisation de l'invention, donnés à titre d'exemples non limitatifs, et représentés aux dessins annexés dans lesquels:
- la figure 1 est une vue schématique en élévation du véhicule glissant selon l'invention, représenté en position active d'utilisation;
- la figure 2 est une vue identique du véhicule de la figure 1, après pliage vers la position inactive de rangement;
- la figure 3 montre une vue en plan de la figure 2, illustrant une manière de transporter le véhicule en position inactive;
- la figure 4 représente une vue en coupe selon la ligne 4-4 de la figure 2;
- la figure 5 montre une vue de détail en coupe et à échelle agrandie, de l'accrochage de la liaison mécanique sur l'élément support;
- les figures 6 et 7 montrent une autre variante de réalisation d'un véhicule à amortisseur, respectivement en position active et en position inactive;
- les figures 8 et 9 représentent deux autres variantes de véhicules équipés chacun d'un repose-pied fixe;
- la figure10 est une vue en coupe transversale du patin de glissement;
- la figure 11 est une vue identique de la figure 10 d'une variante de profil de patin ;
- les figures 12 à 16 montrent diverses formes de réalisation de l'organe de conduite.
- les figures 17 à 20 sont des vues analogues à la figure 1 de trois autres variantes de réalisation de la suspension du véhicule ;
- les figures 21 à 23 montrent une autre réalisation de suspension d'un véhicule, respectivement en position relevée, en position intermédiaire et en position repliée ;
- la figure 24 est une vue en coupe selon la ligne 24-24 de la figure 21 ;
- la figure 25 est une vue en coupe selon la ligne 25-25 de la figure 23
- les figures 26 à 28 représentent une autre réalisation de suspension d'un véhicule, respectivement en position relevée, en et en position repliée.

### Description détaillée de l'invention

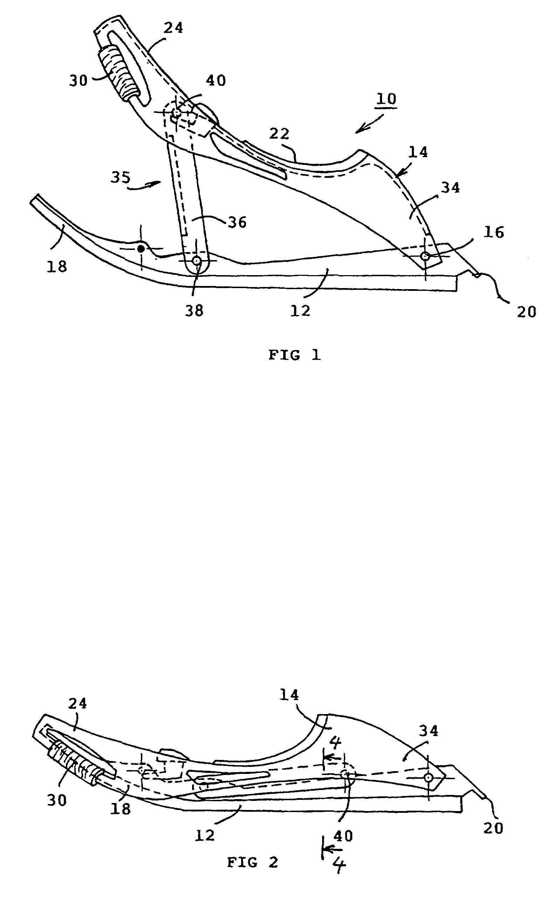

En référence aux figures 1 à 4, un véhicule glissant 10 pour sport de neige, comporte un patin de glissement 12 unique prenant appui sur la neige, et un élément de support 14 articulé sur le patin de glissement 12 autour d'un axe 16 transversal s'étendant perpendiculairement par rapport à la direction longitudinale. Le patin 12 présente une forme de ski court ayant une largeur supérieure à 5 cm, et une longueur inférieure à 140 cm.

La partie antérieure du patin 12 constitue une spatule 18 relevée vers le haut dans le sens du glissement, tandis que la partie arrière est dotée d'un organe de freinage 20 susceptible de freiner le véhicule 10 en descente suite à une commande manuelle.

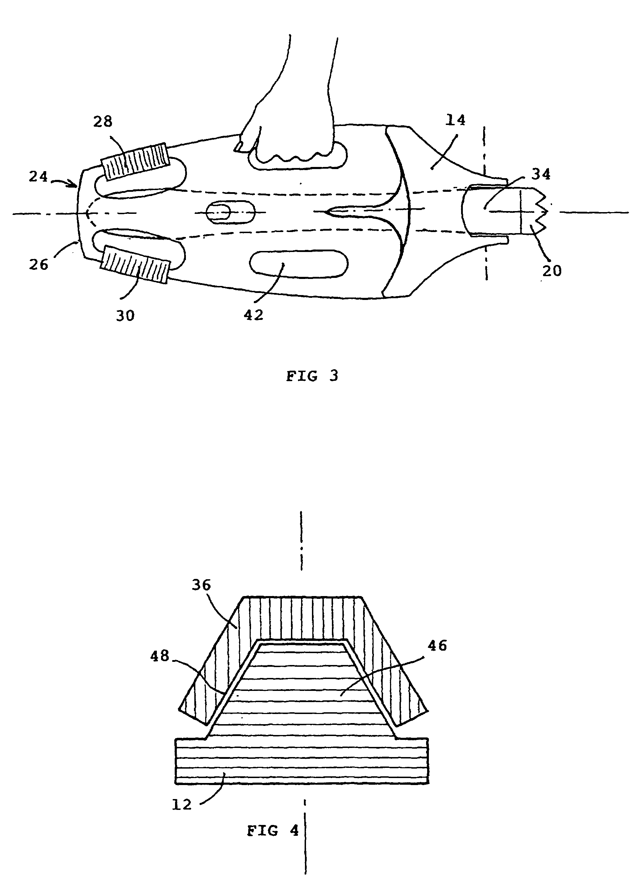

La partie intermédiaire de l'élément de support 14 est agencée en siège 22, lequel est prolongé vers l'avant par un organe de conduite 24 disposé entre les jambes de l'utilisateur lorsque ce dernier se trouve en position assis sur le siège 22. L'organe de conduite 24 comprend à titre d'exemple un guidon 26 à deux poignées de préhension 28, 30 (figure 3) séparées l'une de l'autre par une branche centrale 32. La base 34 de l'élément de support 14 est montée à pivotement sur l'axe 16 transversal à l'arrière du patin 12.

L'avant de l'élément de support 14 est relié au patin 12 par une liaison mécanique 35 comprenant une biellette 36 articulée sur un axe 38 du patin 12, et ayant une extrémité opposée 40 déconnectable de l'élément de support 14. Dans la position active (figure 1), l'extrémité 40 supérieure de la biellette 36 est verrouillée pour constituer une liaison d'écartement rigide, par laquelle l'élément de support 14 est décalé angulairement du patin 12 par un angle aigu.

Dans la position inactive (figure 2), l'encombrement du véhicule 10 peut être réduit au minimum après déverrouillage préalable de l'extrémité 40 de la biellette 36 de liaison, suivi de son rangement sur le patin 12 après pivotement autour de l'axe 38 dans le sens des aiguilles d'une montre. Il suffit ensuite de rabattre par pivotement en sens inverse autour de l'axe 16 l'élément de support 14 vers une position abaissée, en appui stable sur la spatule 18.

La partie intermédiaire de l'élément de support 14 est pourvue d'au moins une ouverture 42 décalée latéralement de l'axe longitudinal 44 pour constituer une poignée de préhension facilitant le transport en position inactive pliée (figure 3).

Sur la figure 4, la partie intermédiaire du patin 12 présente un bossage 46 de section sensiblement trapézoïdale, coopérant avec un évidement 48 de forme conjuguée de la biellette 36 lors de son rangement sur le patin 12.

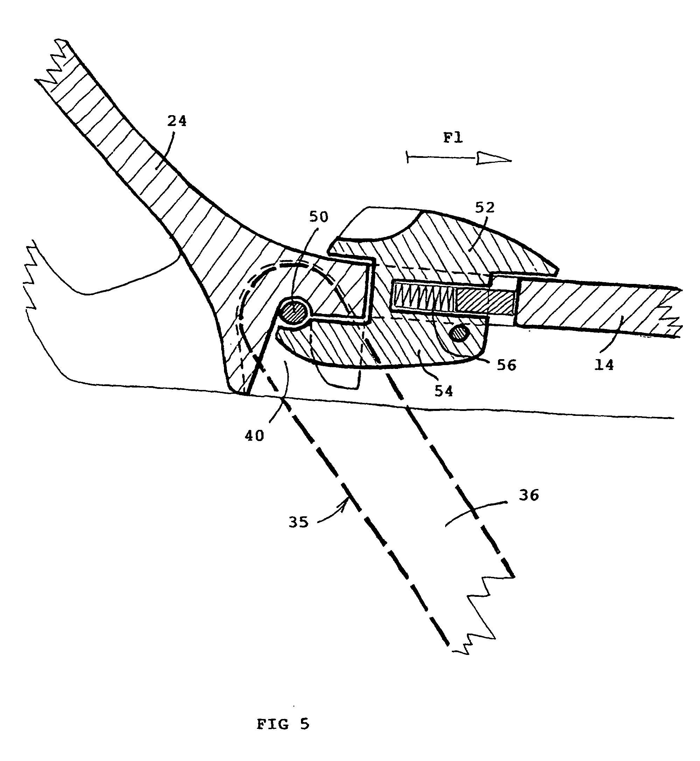

En référence à la figure 5, l'extrémité 40 déconnectable de la biellette 36 de liaison de la figure 1, comporte un axe 50 maintenu au fond d'une encoche 52 en U de l'élément de support 14 au moyen d'un verrou 52 télescopique. Le verrou 52 est doté d'un bras de retenue 54 empêchant l'échappement de l'axe 50, et d'un ressort 56 interne sollicitant le verrou 52 vers la position verrouillée dans la zone de raccordement de l'avant du siège 22 avec l'organe de conduite 24. Le déplacement manuel du verrou 52 dans le sens de la flèche F1 à l'encontre de la force de rappel du ressort 56 provoque le retrait du bras 54, et la libération de l'axe 50. Il est alors possible de plier la biellette 36, et de ramener l'élément de support 14 vers la position inactive illustrée à la figure 2.

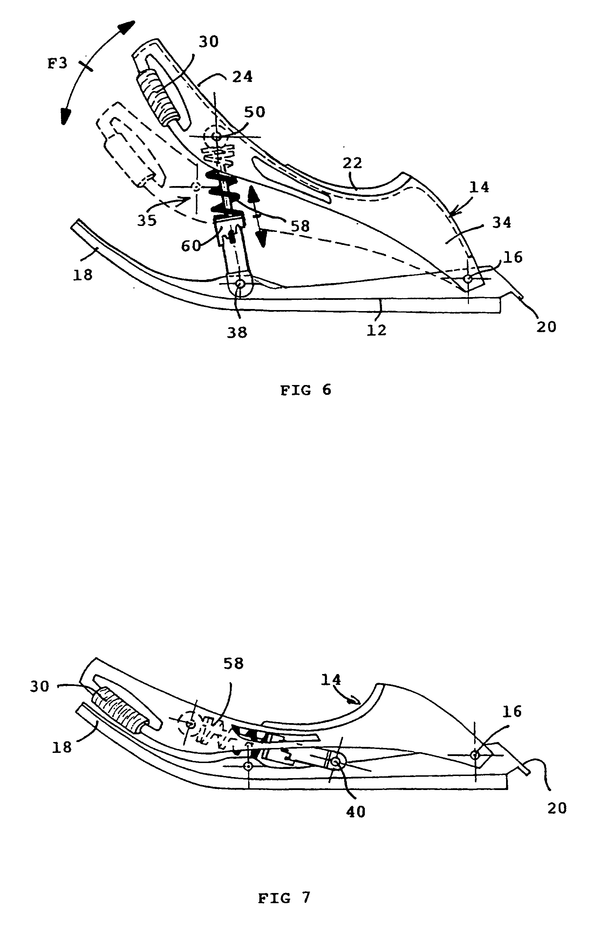

Sur la figure 6, la biellette 36 est associée à un organe amortisseur 58 permettant une flexion limitée de l'élément de support 14 (flèche F3) en fonction du poids du pilote, et des chocs mécaniques encaissés par le véhicule 10 en descente. L'organe amortisseur 58 est formé à titre d'exemple par un ressort métallique de compression, ou un combiné ressort amortisseur dont la précontrainte est avantageusement ajustable au moyen d'un dispositif de réglage manuel 60, par exemple utilisant une butée à crémaillère ou à came. Tout autre organe de suspension peut être utilisé, notamment un tampon déformable en caoutchouc ou en élastomère, ou un amortisseur oléapneumatique ou hydraulique.

Sur la figure 7, l'extrémité 40 supérieure de l'organe amortisseur 58 est déconnectable de l'élément de support 14 pour permettre le pliage et le rangement de l'ensemble vers la position inactive.

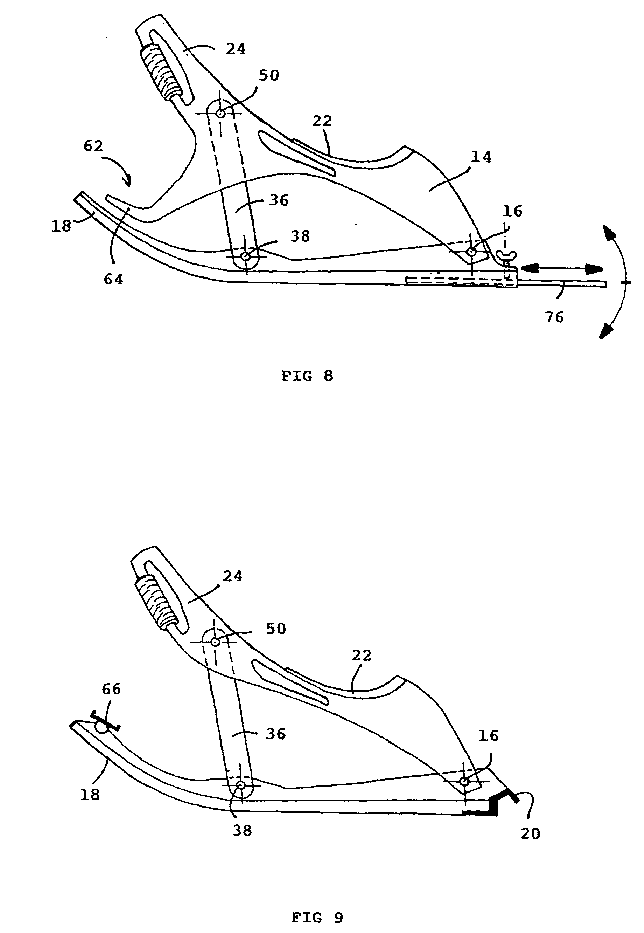

En référence aux figures 8 et 9, le véhicule 10 peut être équipé en plus d'un dispositif repose-pied 62 monté à l'avant de la liaison mécanique. Le dispositif repose-pied 62 est constitué, soit par une extension 64 antérieure de l'élément de support 14 (figure 8), soit par une barre 66 transversale solidaire de la spatule 18 (figure 9). L'extension 64 ou la barre 66 du dispositif repose-pied 62 fixe est agencée dans la zone antérieure sous le niveau du siège 22, et au-dessus du patin de glissement 12.

La surface de glissement du patin 12 sur la neige peut être soit plane, soit pourvue de zones légèrement concaves ou convexes. Des carres métalliques peuvent être prévues sur une partie au moins de la longueur des côtés latéraux de la face de glissement. La partie arrière comporte avantageusement une semelle métallique s'étendant sur toute la largeur du patin 12, et se terminant par une racle de l'organe de freinage 20. Le corps du patin 12 et de l'élément de support 14 est réalisé soit en bois, soit en matière plastique moulée, soit en matière composite ou en alliage de métaux.

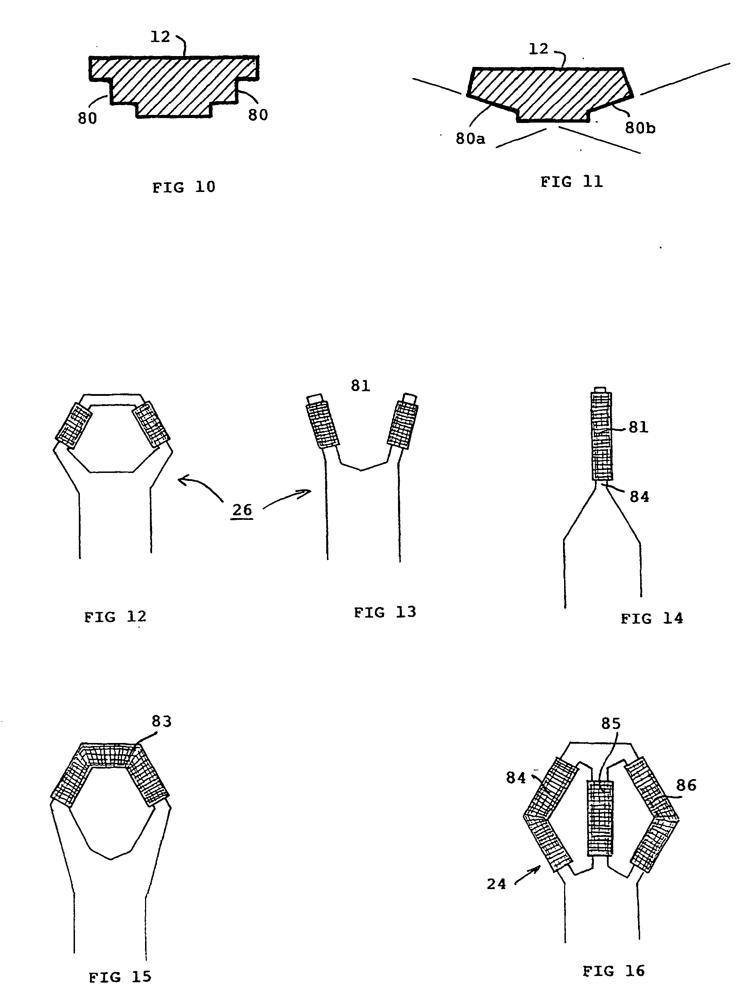

Sur la figure 10, la surface de glissement 80 du patin 12 est subdivisée en une pluralité de surfaces d'appui décalées en gradins dans le sens vertical pour ajuster l'enfoncement du véhicule en fonction de l'état de la neige. Les chants latéraux du patin de glissement 12 peuvent être rectilignes et parallèles à l'axe longitudinal, ou de formes légèrement concaves ou convexes dans la partie intermédiaire. Selon la figure 11, les gradins sont remplacés des surfaces d'appui obliques 80a, 80b faisant un angle obtus entre elles dans deux plans sécants formant un dièdre ouvert vers le haut.

L'organe de conduite 24 peut être conformée selon d'autres modes de réalisation. Sur la figure 12, l'organe de conduite correspond au guidon de la figure 3, mais sans branche centrale. Sur la figure 13, le guidon constitue une boucle ouverte en forme de fourche 81 disposée symétriquement par rapport au plan médian longitudinal. Sur les figures 14 et 15, une poignée 82, 83 unique se trouve respectivement sur la branche verticale ou horizontale supérieure.

Sur la figure 16, l'organe de conduite 24 comprend trois branches avec des poignées 84, 85, 86.

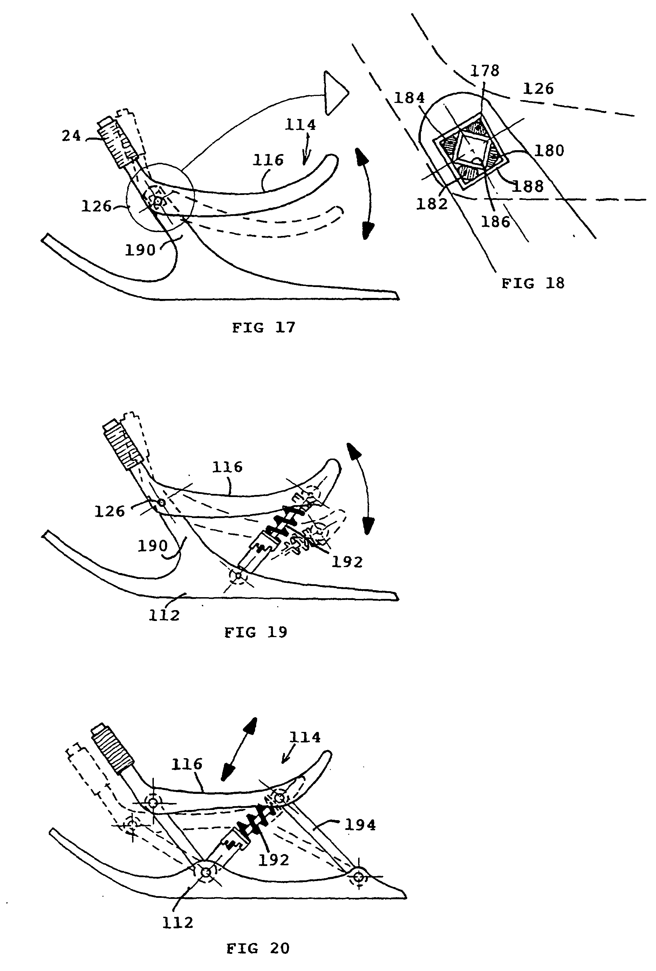

En référence aux figures 17 et 18, le siège116 est monté à pivotement limité sur la jambe de liaison 190 au moyen d'une liaison élastique formée par au moins une articulation 126 provoquant le rappel automatique de l'élément de support 114 vers la position initiale (en traits forts sur la figure 17). L'élément de support 114 se trouve en porte-à-faux sur l'avant du patin 112, et l'articulation 126 s'étend transversalement par rapport à la direction longitudinale du patin 112. L'articulation 126 comporte une pluralité de blocs 178, 180, 182, 184 de caoutchouc précontraints agencés entre les quatre faces d'un premier tube 186 carré, et les quatre angles d'un deuxième tube 188 carré, le premier tube 186 étant disposé concentriquement à l'intérieur du deuxième tube 188.

Sur la figure 19, un organe amortisseur 192 additionnel est avantageusement articulé entre la partie médiane du patin 112, et la partie arrière de l'élément de support 114 en faisant un V avec la jambe 190.

Sur la figure 20, une biellette 194 est articulée à l'arrière de l'élément support 114 et du patin 112 en s'étendant parallèlement à la jambe 190.

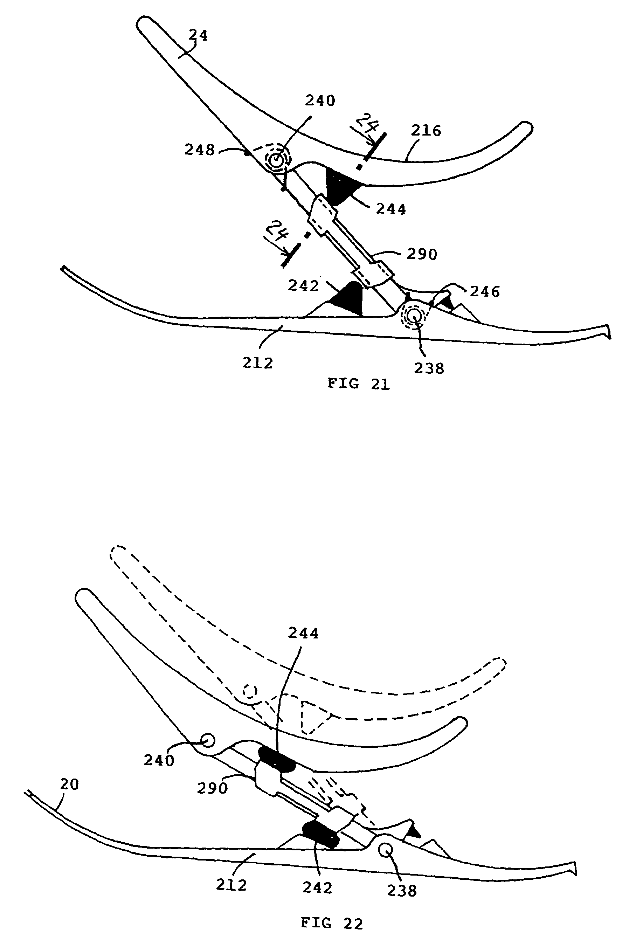

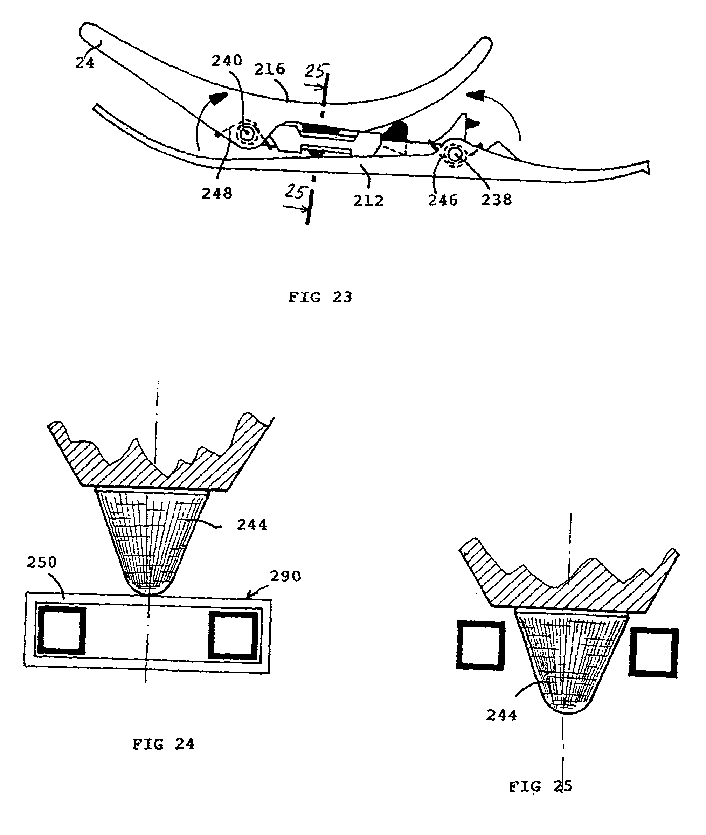

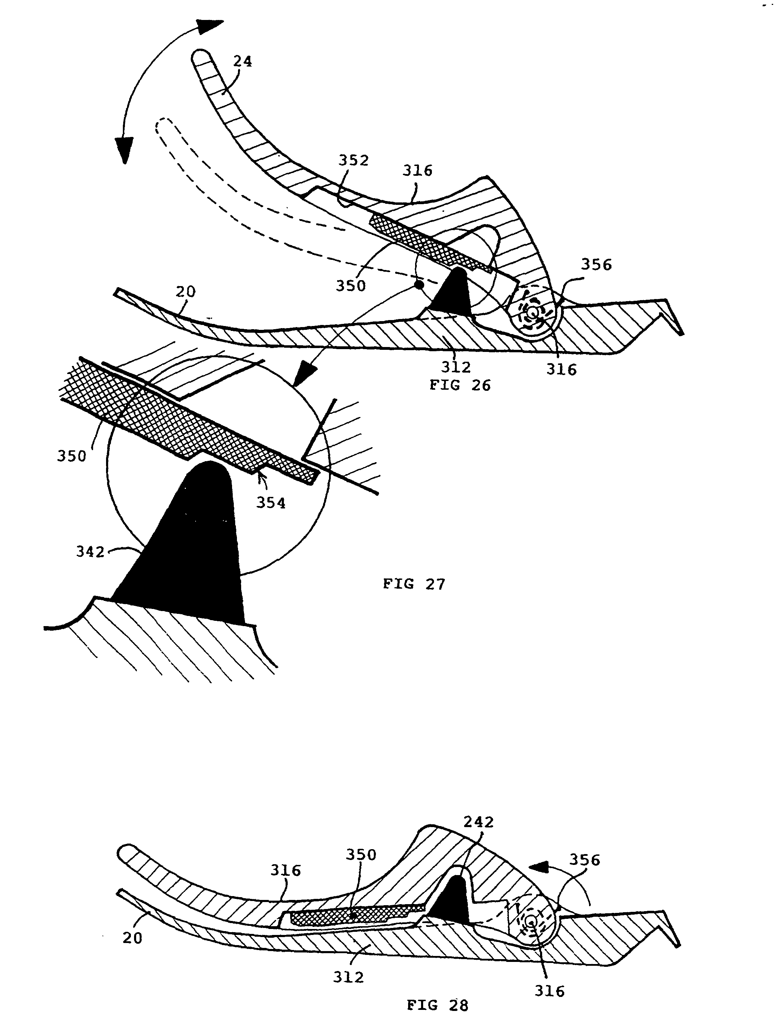

En référence aux figures 21 à 25, le siège 216 est relié au patin 212 au moyen d'une liaison mécanique 290 à deux axes d'articulation 238, 240. L'organe amortisseur 58 à ressort du dispositif des figures 7 et 8 est remplacé par un système de butées élastiques 242, 244 à déformation progressive, et de formes coniques. La butée inférieure 242 est disposée sur la face supérieure du patin 212 en avant de l'axe d'articulation 238, tandis que la butée supérieure 244 est agencée sous le siège 216. Un ressort de torsion 246, 248 est enfilé autour de chaque axe 238, 240, et la jambe de la liaison mécanique 290 est intercalée entre les deux butées 242, 244, lesquelles se déforment par compression lors du passage du siège 216 de la position en pointillé vers la position en traits forts (figure 22). Dans la position active des figures 21 et 22, la butée 244 est placée en regard d'une plaque d'appui 250 de liaison mécanique 290. La plaque d'appui 250 est escamotée dans la position inactive repliée ( figure 23), de manière à autoriser le passage de la butée 244 ( figure 25).

Selon le mode de réalisation des figures 26 à 28, le siège 316 est articulé autour d'un axe 316 transversal à l'arrière du patin 312, et la suspension est assurée par l'intermédiaire d'une butée 342 conique à élasticité progressive fixée sur la face supérieure du patin 312. Une plaque d'appui 350 est logée dans une rainure 352 longitudinale sous la face inférieure du siège 316, et coopère avec la butée 342 lors du mouvement de suspension du siège 316. La plaque d'appui 350 possède une extrémité en gradins 354 permettant à la fois le réglage de l'inclinaison du siège 316 par rapport au patin 312, et la précontrainte de la butée 342 pour doser la suspension. Dans la position repliée de la figure 28, le ressort de torsion 356 autour de l'axe 316 maintient le siège 316 rabattu contre le patin 312.

L'élément de support peut être équipé d'un paire de bretelles ( non représentées) pour faciliter le transport du véhicule 10 à la main ou sur le dos.

## Revendications

1. Véhicule glissant pour sport de neige, comprenant :
- un patin de glissement (12, 112, 212,312) prenant appui sur la neige,
- un siège (22, 116, 216, 316) sur lequel s'assoit le conducteur,
- un élément de support (14, 114) articulé par rapport au patin de glissement (12, 112, 212, 312) autour d'un axe transversal ( 16, 126, 238, 316) s'étendant perpendiculairement au plan de symétrie du véhicule,
- et un organe de conduite (24, 26) manuel pour la commande directionnelle et dé freinage du véhicule, ledit organe étant en liaison avec l'élément de support (14, 114,) et conformé selon au moins une poignée ou un guidon, situé, lorsque le pilote se trouve en position assise sur le siège (22, 116, 216, 316), entre les jambes du pilote en avant du siège et dans le sens du glissement,
**caractérisé en ce qu'**une partie intermédiaire de l'élément de support (14, 114) constitue ledit siège, lequel fait corps avec et est prolongé à l'avant par l'organe de conduite (24, 26).

2. Véhicule glissant selon la revendication 1, **caractérisé en ce que** l'élément de support (14) est relié au patin (12) par une liaison mécanique (35) permettant de rabattre l'élément de support (14) contre le patin (12) dans une position de rangement et de transport.

3. Véhicule glissant selon la revendication 2, **caractérisé en ce que** la liaison mécanique (35) est déconnectable à l'une de ses extrémités.

4. Véhicule glissant selon la revendication 2, **caractérisé en ce que** la liaison mécanique (35) est formée par une genouillère à biellettes repliables selon des branches d'un compas.

5. Véhicule glissant selon la revendication 2, **caractérisé en ce que** la liaison mécanique (35) comporte une biellette (36) articulée sur un axe (38) du patin (12), et ayant une extrémité opposée (40) coopérant avec des moyens de commande susceptibles soit de verrouiller la biellette (36) dans une position active pour obtenir un décalage angulaire de l'élément de support (14) par rapport au patin (12), soit de déverrouiller la biellette (36) pour briser la liaison mécanique (35) lors du rangement .

6. Véhicule glissant selon la revendication 5, **caractérisé en ce que** l'extrémité (40) déconnectable de la biellette (36) est pourvue d'un axe (50) maintenu en position verrouillée au fond d'une encoche (52) de l'élément support (14) au moyen d'un verrou (52).

7. Véhicule glissant selon l'une des revendications 1 à 6, **caractérisé en ce qu'**il comporte un organe amortisseur (58, 192, 244, 242, 342) autorisant un mouvement relatif de rotation autour de l'axe ( 16, 126, 238, 316) de l'élément de support (14, 114) par rapport au patin (12, 112, 212, 312).

8. Véhicule glissant selon la revendication 7, **caractérisé en ce que** l'organe amortisseur (58) est formé par un ressort ou un combiné ressort -amortisseur oléopneumatique ou hydraulique, ou un élément en matière élastiquement déformable, notamment du caoutchouc ou un élastomère.

9. Véhicule glissant selon la revendication 7 ou 8, **caractérisé en ce qu'**il comporte un dispositif de réglage manuel (60) de la précontrainte de l'organe amortisseur (58).

10. Véhicule glissant selon l'une des revendications 1 à 9, **caractérisé en ce qu'**il comporte des moyens de rappel et/ou de blocage permettant de maintenir l'élément de support (14) contre le patin (12) dans ladite position de rangement et de transport.

11. Véhicule glissant selon l'une des revendications 1 à 10, **caractérisé en ce qu'**il comporte un organe de freinage (20) agencé à l'arrière du patin (12, 112, 212, 312).

12. Véhicule glissant selon l'une des revendications 1 à 11, **caractérisé en ce que** la surface de glissement du patin (12) peut être étendue vers l'arrière au moyen d'un prolongateur ( 76).

13. Véhicule glissant selon l'une des revendications 1 à 12, **caractérisé en ce qu'**il comporte un dispositif repose-pied (62, 66) disposé à l'avant de la liaison mécanique (35) et sous le niveau du siège (22), en étant solidarisé à une extension (64) de l'élément support (14), ou à la spatule (18) relevée du patin (12).

14. Véhicule glissant selon l'une des revendications 1 à 13, **caractérisé en ce que** l'élément de support (14) comporte dans la zone d'assise du pilote au moins une ouverture (42) pour constituer une poignée de préhension, et/ou une bretelle de portage pour faciliter le transport du véhicule (10).

15. Véhicule glissant selon la revendication 7, **caractérisé en ce que** l'organe amortisseur est formé par une articulation à torsion (126) comportant une pluralité de blocs (178, 180, 182, 184) de caoutchouc précontraints, agencés entre les quatre faces d'un premier tube (186) carré, et les quatre angles d'un deuxième tube (188) carré, le premier tube (186) étant disposé concentriquement à l'intérieur du deuxième tube (188).

16. Véhicule glissant selon l'une des revendications 1 à 15, **caractérisé en ce que** les chants longitudinaux opposés du patin (12) sont concaves dans la zone d'extension du siège (16).

17. Véhicule glissant selon l'une des revendications 1 à 16, **caractérisé en ce que** l'articulation est agencée à l'une des extrémités d'une jambe de liaison (90, 190, 290) entre le patin (12, 112, 212) et l'élément de support (14, 114).

18. Véhicule glissant selon la revendication 17, **caractérisé en ce** l'organe amortisseur (192) est articulé entre la partie médiane du patin (112) et la partie arrière de l'élément de support (114) en faisant un V avec la jambe (190).

19. Véhicule glissant selon la revendication 18, **caractérisé en ce qu'**une biellette (194) est articulée à l'arrière de l'élément support (114) et du patin (112) en s'étendant parallèlement à la jambe (90).

20. Véhicule glissant selon l'une des revendications 1 à 19, **caractérisé en que** le patin (12, 112, 212, 312) comporte au moins deux surfaces latérales (80) d'appui et de glissement s'étendant sur une partie au moins de la longueur du patin, et disposées symétriquement de part et d'autre d'une surface centrale tout en étant décalées dans le sens vertical par rapport à celle -ci.

21. Véhicule selon l'une des revendications 1 à 19, **caractérisé en que** sur une partie au moins de la longueur du patin (12, 112, 212, 312), la surface d'appui et de glissement comporte au moins deux surfaces (80a, 80b) disposées symétriquement par rapport au plan vertical de symétrie du véhicule, dans deux plans sécants formant un dièdre ouvert vers le haut.

22. Véhicule selon la revendication 8, **caractérisé en que** le siège (216) est relié au patin (212) au moyen d'une liaison mécanique (290) à deux axes d'articulation ( 240, 238), et que l'organe amortisseur comporte un système de butées élastiques (242, 244) à déformation progressive, agencées respectivement sur la face supérieure du patin (212) en avant de l'axe d'articulation (238), et sous le siège (216) de part et d'autre d'une jambe de ladite liaison (290).

23. Véhicule selon la revendication 8, **caractérisé en que** le siège (316) est articulé au patin (312) autour d'un axe (316), la suspension étant assurée par l'intermédiaire d'une butée (342) à élasticité progressive, fixée sur la face supérieure du patin (312), et coopérant avec une plaque d'appui (350) logée dans une face inférieure du siège (316), ladite plaque étant ajustable pour le réglage de l'inclinaison du siège (316) et la précontrainte de la butée (342).

## Patentansprüche

1. Gleitfahrzeug zum Fahren im Schnee, das umfasst:
- einen Gleitschuh (12, 112, 212, 312), der auf dem Schnee aufliegt,
- einen Sitz (22, 116, 216, 316), auf dem der Fahrer Platz nimmt,
- ein Stützelement (14, 114), das bezüglich dem Gleitschuh (12, 112, 212, 312) gelenkig um eine Querachse (16, 126, 238, 316) gelagert ist, die sich lotrecht zur Symmetrieebene des Fahrzeugs erstreckt,
- und eine manuell bediente Lenkvorrichtung (24, 26) zum Steuern und Bremsen des Fahrzeugs, welche Einrichtung mit einem Stützelement (14, 114) verbunden und so aufgebaut ist, dass sie zumindest einen Griff oder Lenker umfasst, der sich, wenn der Fahrer auf dem Sitz sitzt (22, 116, 216, 316), zwischen dessen Beinen vor dem Sitz und in Gleitrichtung befindet,
**dadurch gekennzeichnet, dass** ein Zwischenteil des Stützelements (14, 114) den Sitz bildet, der fest mit der Lenkeinrichtung (24, 26) verbunden und nach vorne durch diese verlängert ist.

2. Gleitfahrzeug nach Anspruch 1, **dadurch gekennzeichnet, dass** das Stützelement (14) mit dem Gleitschuh (12) über eine mechanische Verbindung (35) verbunden ist, die in einer Lagerungs- und Transportposition ein Umklappen des Stützelements (14) zum Gleitschuh (12) hin erlaubt.

3. Gleitfahrzeug nach Anspruch 2, **dadurch gekennzeichnet, dass** die mechanische Verbindung (35) an einem ihrer Enden lösbar ist.

4. Gleitfahrzeug nach Anspruch 2, **dadurch gekennzeichnet, dass** die mechanische Verbindung (35) von einem beweglichen Gelenk mit umklappbaren Stangen wie den Armen eines Zirkels gebildet wird.

5. Gleitfahrzeug nach Anspruch 2, **dadurch gekennzeichnet, dass** die mechanische Verbindung (35) einen Schwingarm (36) umfasst, der an eine Achse (38) des Gleitschuhs (12) angelenkt ist und ein entgegengesetztes Ende (40) hat, das mit Steuerungsvorrichtungen zusammenwirkt, die den Schwingarm (36) entweder in einer aktiven Position zum Erreichen einer Winkelversetzung des Stützelements (14) zum Gleitschuh (12) verriegeln oder den Schwingarm (36) freigeben, um die mechanische Verbindung (35) zu lösen, wenn das Fahrzeug verstaut wird.

6. Gleitfahrzeug nach Anspruch 5, **dadurch gekennzeichnet, dass** das lösbare Ende (40) des Schwingarms (36) mit einem Bolzen (50) versehen ist, der mittels eines Riegels (52) in verriegelter Position in einer Ausnehmung (52) des Stützelements (14) gehalten wird.

7. Gleitfahrzeug nach einem der Ansprüche 1 bis 6, **dadurch gekennzeichnet, dass** es eine stoßdämpfende Einrichtung (58, 192, 244, 242, 342) umfasst, die eine Drehbewegung des Stützelements (14, 114) bezüglich dem Gleitschuh (12, 112, 212, 312) um die Achse (16, 126, 238, 316) erlaubt.

8. Gleitfahrzeug nach Anspruch 7, **dadurch gekennzeichnet, dass** die stoßdämpfende Einrichtung (58) von einer Feder oder einer Kombination aus einer Feder und einem ölpneumatischen oder hydraulischen Stoßdämpfer oder einem Element aus elastisch verformbaren Material, insbesondere Gummi oder einem Elastomer, gebildet wird.

9. Gleitfahrzeug nach Anspruch 7 oder 8, **dadurch gekennzeichnet, dass** es eine manuell gesteuerte Vorrichtung (60) zum Einstellen der mechanischen Vorspannung der stoßdämpfenden Einrichtung (58) umfasst.

10. Gleitfahrzeug nach einem der Ansprüche 1 bis 9, **dadurch gekennzeichnet, dass** es Mittel zum Zurückholen und/oder Blockieren umfasst, die ein Halten des Stützelements (14) gegen den Gleitschuh (12) in der Stellung ermöglichen, in der das Fahrzeug verstaut und transportiert wird.

11. Gleitfahrzeug nach einem der Ansprüche 1 bis 10, **dadurch gekennzeichnet, dass** es eine Bremseinrichtung (20) umfasst, die im hinteren Bereich des Gleitschuhs (12, 112, 212, 312) angeordnet ist.

12. Gleitfahrzeug nach einem der Ansprüche 1 bis 11, **dadurch gekennzeichnet, dass** die Gleitfläche des Gleitschuhs (12) mittels eines Verlängerungsstücks (76) nach hinten verlängert werden kann.

13. Gleitfahrzeug nach einem der Ansprüche 1 bis 12, **dadurch gekennzeichnet, dass** es eine Fußauflagevorrichtung (62, 66) umfasst, die sich vor der mechanischen Verbindung (35) und unter der Höhe des Sitzes (22) befindet und fest an einer Verlängerung (64) des Stützelements (14) oder an der angehobenen Schaufel (18) des Gleitschuhs (12) angebracht ist.

14. Gleitfahrzeug nach einem der Ansprüche 1 bis 13, **dadurch gekennzeichnet, dass** das Stützelement (14) im Sitzbereich des Fahrers mindestens eine Öffnung (42) zur Bildung eines Griffs und/oder einen Tragegurt aufweist, um den Transport des Fahrzeugs (10) zu erleichtern.

15. Gleitfahrzeug nach Anspruch 7, **dadurch gekennzeichnet, dass** die stoßdämpfende Einrichtung von einem Drehgelenk (126) gebildet wird, das mehrere vorgespannte Gummiblöcke (178, 180, 182, 184) umfasst, die zwischen den vier Seiten einer ersten quadratischen Röhre (186) und den vier Ecken einer zweiten quadratischen Röhre (188) vorgesehen sind, wobei die erste Röhre (186) konzentrisch innerhalb der zweiten Röhre (188) angeordnet ist.

16. Gleitfahrzeug nach einem der Ansprüche 1 bis 15, **dadurch gekennzeichnet, dass** die entgegengesetzten Längskanten des Gleitschuhs (12) im Verlängerungsbereich des Sitzes (16) konkav sind.

17. Gleitfahrzeug nach einem der Ansprüche 1 bis 16, **dadurch gekennzeichnet, dass** das Gelenk zwischen einem der Enden einer Verbindungsstrebe (90, 190, 290) zwischen dem Gleitschuh (12, 112, 212) und dem Stützelement (14, 114) angeordnet ist.

18. Gleitfahrzeug nach Anspruch 17, **dadurch gekennzeichnet, dass** die stoßdämpfende Einrichtung (192) zwischen dem mittleren Bereich des Gleitschuhs (112) und dem hinteren Bereich des Stützelements (114) angeordnet ist, der mit der Strebe (190) ein V bildet.

19. Gleitfahrzeug nach Anspruch 18, **dadurch gekennzeichnet, dass** hinter dem Stützelement (114) und dem Gleitschuh (112) ein Schwingarm (194) angelenkt ist, der sich parallel zur Strebe (190) erstreckt.

20. Gleitfahrzeug nach einem der Ansprüche 1 bis 19, **dadurch gekennzeichnet, dass** der Gleitschuh (12, 112, 212, 312) mindestens zwei seitliche Auflageund Gleitflächen (80) aufweist, die sich über mindestens einen Teil der Länge des Gleitschuhs erstrecken und symmetrisch beidseits einer Mittelfläche angeordnet sind, dabei jedoch in senkrechter Richtung bezogen auf diese versetzt sind.

21. Fahrzeug nach einem der Ansprüche 1 bis 19, **dadurch gekennzeichnet, dass** auf mindestens einem Teil der Länge des Gleitschuhs (12, 112, 212, 312) die Auflage- und Gleitfläche mindestens zwei Flächen (80a, 80b) aufweist, die bezogen auf die vertikale Symmetrieebene des Fahrzeugs symmetrisch angeordnet sind, und zwar auf zwei einander schneidenden Ebenen, die einen nach oben offenen Dieder bilden.

22. Fahrzeug nach Anspruch 8, **dadurch gekennzeichnet, dass** der Sitz (216) mittels einer mechanischen Verbindung (290) mit zwei Gelenkachsen (240, 238) mit dem Gleitschuh (212) verbunden ist und dass die stoßdämpfende Vorrichtung ein System aus elastischen Anschlägen (242, 244) umfasst, die sich schrittweise verformen und jeweils auf der Oberseite des Gleitschuhs (212) vor der Gelenkachse (238) bzw. unter dem Sitz (216) beidseits einer Strebe dieser Verbindung (290) angeordnet sind.

23. Fahrzeug nach Anspruch 8, **dadurch gekennzeichnet, dass** der Sitz (316) um eine Achse (316) an den Gleitschuh (312) angelenkt ist, wobei die Federung mittels eines schrittweise nachgebenden Anschlags (342) erfolgt, der auf der Oberseite des Gleitschuhs (312) angebracht ist und mit einer Auflageplatte (350) zusammenwirkt, die in einer Unterseite des Sitzes (316) untergebracht ist, wobei die Platte zur Einstellung der Neigung des Sitzes (316) und der Vorspannung des Anschlags (342) verstellbar ist.

## Claims

1. Sliding vehicle for snow sport, comprising :
- a sliding pad (12, 112, 212, 312) bearing on the snow,
- a seat (22, 116, 216, 316) on which the driver sits down,
- a support element (14, 114) articulated with respect to the sliding pad (12, 112, 212, 312) around a transverse axis (16, 126, 238, 316) extending perpendicularly to the symmetric plane of the vehicle,
- and a manual conducting member (24, 26) for the steering and braking control of the vehicle, said member being connected with the support element (14, 114) and formed at least by a handle or handlebar, located when the pilot user is sitting on the seat (22, 116, 216, 316), between the legs of the pilot in front of the seat and in the sliding direction,
**characterized in that** an intermediate part of the support element (14, 114) forms the seat, which is integral with it and which is extended to the front by the conducting member (24, 26).

2. Sliding vehicle according to claim 1, **characterized in that** the support element (14) is connected with the pad (12) by a mechanical connection (35) authorizing to turn down the support element (14) against the pad (12) in a putting away and transportation position.

3. Sliding vehicle according to claim 2, **characterized in that** the mechanical connection (35) can be deconnected at one of its ends.

4. Sliding vehicle according to claim 2, **characterized in that** the mechanical connection (35) is constituted by a toggle joint with rods which can be folded down according to the legs of a compass.

5. Sliding vehicle according to claim 2, **characterized in that** the mechanical connection (35) comprises a rod (36) articulated on an axis (38) of the pad (12) and comprising an opposite end (40) cooperating with control means which can lock the rod (36) in an active position in order to obtain an angular shifting of the support element (14) with respect to the pad (12), or which can unlock the rod (36) in order to break the mechanical connection (35) when putting away.

6. Sliding vehicle according to claim 5, **characterized in that** the end (40) which can be deconnected from the rod (36), is provided with an axis (50) which is maintained in the locked position on the bottom of a slot (52) of the support element (14) by means of a bolt (52).

7. Sliding vehicle according to one of the claims 1 to 6, **characterized in that** it comprises a shock absorbing member (58, 192, 244, 342) authorizing a relative rotation movement around the axis (16, 126, 236, 316) of the support element (14, 114) with respect to the pad (12, 112, 212, 312).

8. Sliding vehicle according to claim 7, **characterized in that** the shock absorbing member (58) is formed by a spring or a combination of spring and oil pneumatic or hydraulic shock absorber, or by an element of a material which can be deformed elastically, in particular rubber or an elastomer.

9. Sliding vehicle according to claim 7 or 8, **characterized in that** it comprises a manual adjustment device (60) for the preconstraint of the shock absorbing member (58).

10. Sliding vehicle according to one of the claims 1 to 9, **characterized in that** it comprises withdraw and/or blocking means authorizing to maintain the support element (14) against the pad (12) in said putting away and transportation position.

11. Sliding vehicle according to one of the claims 1 to 10, **characterized in that** it comprises a braking member (20) arranged at the rear portion of the pad (12, 112, 212, 312)

12. Sliding vehicle according to one of the claims 1 to 11, **characterized in that** the sliding surface of the pad (12) can be extended to the rear portion by means of an extension part (76).

13. Sliding vehicle according to one of the claims 1 to 12, **characterized in that** a footrest device (62, 66) is arranged in front of the mechanical connection (35) and under the level of seat (22), and connected with an extension (64) of the support element (14) or with the raised tip (18) of the pad (12).

14. Sliding vehicle according to one of the claims 1 to 13, **characterized in that** the support element (14) comprises in the seat area of the pilot at least one opening (42) in order to constitute a gripping handle, and/or a transportation strap to make the transportation of the vehicle (10) easier.

15. Sliding vehicle according to claim 7, **characterized in that** the shock absorbing member is constituted by a torsion articulation (126) comprising a plurality of prestressed rubber blocks (178, 180, 182, 184), arranged between the four faces of a first square tube (186) and the four angles of a second square tube (188), the first tube (186) being arranged in a concentric manner inside the second tube (188).

16. Sliding vehicle according to one of the claims 1 to 15, **characterized in that** the opposite longitudinal edges of the pad (12) are concave in the extension area of the seat (16).

17. Sliding vehicle according one of the claims 1 to 16, **characterized in that** the articulation is arranged at one of the ends of a connection leg (90, 190, 290) between the pad (12, 112, 212) and the support element (14, 114).

18. Sliding vehicle according to claim 17, **characterized in that** the shock absorbing member (192) is articulated between the median portion of the pad (112) and the rear portion of the support element (114) forming a V with the leg (190).

19. Sliding vehicle according to claim 18, **characterized in that** a rod (194) is articulated at the rear portion of the support element (114) and the pad (112) and extending parallel to the leg (90).

20. Sliding vehicle according to one of the claims 1 to 19, **characterized in that** the pad (12, 112, 212, 312) comprises at least two lateral support and sliding surfaces (80) extending at least on a portion of the pad length and arranged symmetrically on both sides of a central surface being at the same time shifted in the vertical sense with respect to this surface.

21. Vehicle according to one of the claims 1 to 19, **characterized in that** at least on one portion of the length of the pad (12, 112, 212, 312) the support and sliding surface comprises at least two surfaces (80a, 80b) arranged symmetrically with respect to the vertical symmetric plan of the vehicle, in two cutting plans constituting a dihedral open at the top.

22. Vehicle according to claim 8, **characterized in that** the seat (216) is connected with the pad (212) by means of a mechanical connection (290) with two articulation axis (240, 238), and that the shock absorbing member comprises a system of elastic stops (242, 244) which can be deformed progressively, arranged respectively on the upper face of the pad (212) in front of the articulation axis (238), and under the seat (216) on each side of a leg of said connection (290).

23. Vehicle according to claim 8, **characterized in that** the seat (316) is articulated to the pad (312) around an axis (316), the suspension being provided by means of a stop (342) of progressive elasticity, fastened on the upper face of the pad (312), and cooperating with a support plate (350) located in a lower face of the seat (316), said plate being adjustable for the adjustment of the inclination of seat (316) and the preconstraint of the stop (342).
